(19)

**Europäisches Patentamt**
**European Patent Office**
**Office européen des brevets**

(11) **EP 4 741 135 A1**

(12) **EUROPEAN PATENT APPLICATION**

(43) Date of publication:
**13.05.2026  Bulletin 2026/20**

(21) Application number: **25214765.7**

(22) Date of filing: **10.11.2025**

(51) International Patent Classification (IPC):
*B29C 48/00* (2019.01)     *B29C 48/16* (2019.01)
*B32B 1/08* (2006.01)      *C08L 23/12* (2006.01)

(52) Cooperative Patent Classification (CPC):
(C-Sets available)
**B32B 1/08; C08L 23/12;** B29C 48/022; B29C 48/09;
B29C 48/13; B29C 48/18; B29K 2995/007;
B29L 2023/18; B29L 2023/22          (Cont.)

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH LA MA MD TN**

(30) Priority: **12.11.2024  US 202463719164 P**

(71) Applicant: **Kraton Polymers Nederland B.V.
1322 CE Almere (NL)**

(72) Inventor: **BALZANO, Luigi
1031 HL Amsterdam (NL)**

(74) Representative: **Henkel & Partner mbB
Patentanwaltskanzlei, Rechtsanwaltskanzlei
Maximiliansplatz 21
80333 München (DE)**

(54) **TUBES AND METHODS OF MAKING SAME**

(57)     The disclosure relates to a tube having differentiated compositions and properties along its length, and to a method for making such a tube. The tube comprises a polymer resin, an elastomer, and optional components, and is formed by continuous extrusion using multiple feeders. The tube includes a first region containing a first composition of 70-100 wt.% polymer resin, 0-30 wt.% elastomer, and 0-10 wt.% optional components, and a second region, at a length from the first region of at least 30 times the OD, containing a second composition of 0-50 wt.% polymer resin, 50-100 wt.% elastomer, and 0-10 wt.% optional components. The polymer resin and elastomer concentrations vary continuously between the regions to produce a compositionally graded structure having a hardness, tensile strength, elasticity, or color differentiation of at least 10% between the first and second region.

SEBS

PP

Fig 1

EP 4 741 135 A1

(52) Cooperative Patent Classification (CPC): (Cont.)

C-Sets
**C08L 23/12, C08L 25/08**

**Description**

**FIELD**

The disclosure relates to a tube having a gradient of properties along the length of the tube, e.g., hardness, tensile strength, elasticity, or color intensity, etc., made by extrusion and methods of manufacturing same.

**BACKGROUND**

Polymeric and elastomeric tubes are widely used across many industries, including medical, industrial, automotive, and consumer applications. These tubes often exhibit differentiated mechanical or physical properties along their length, such as varying hardness, elasticity, flexibility, or color, to meet functional requirements specific to each segment of the tube. For example, in medical catheters, certain portions of the tube may need to be softer and more flexible for patient comfort near insertion sites, while other portions require higher rigidity for control, stability, or torque transmission. Similarly, in industrial or automotive tubing, property gradients can enhance vibration damping, provide flexibility near couplings, or increase wear or chemical resistance in high-stress regions.

Traditional techniques for producing tubing with different properties along its length typically involve joining or welding segments made from different materials. While effective for creating discrete hardness zones, these processes increase manufacturing complexity and may introduce weak joints or discontinuities. Other approaches, such as localized heating or cooling, can alter crystallinity and hardness but are difficult to control and yield inconsistent gradients. Co-extrusion techniques, which extrude multiple materials simultaneously through concentric dies, have also been applied to create radial or layered gradients but require complex machinery, precise synchronization of multiple material flows, and are limited to polymer pairs that exhibit interfacial compatibility.

There remains a need for a simpler and more versatile process capable of forming longitudinally (axially) and continuously graded tubing without reliance on conventional co-extrusion or welding techniques.

**SUMMARY**

In an aspect, a tube having differentiated composition and physical properties along its length, and a method for manufacturing such a tube is disclosed. The tube comprises at least a polymer resin and an elastomer whose concentrations vary continuously along the tube. The tube comprises a first region containing a first composition having defined concentrations of components comprising, consisting essentially of, or consisting of 70 to 100 wt.% polymer resin, 0 to 30 wt.% elastomer, and 0 to 10 wt.% optional components, and a second region containing a second composition having defined concentrations of components comprising, consisting essentially of, or consisting of 0 to 50 wt.% polymer resin, 50 to 100 wt.% elastomer, and 0 to 10 wt.% optional components. The concentrations of the polymer resin and elastomer components vary longitudinally and continuously along the length of the tube between the first region and the second region to form a compositionally graded structure in which at least one physical property selected from hardness, tensile strength, elongation at break, or flexural modulus differs by at least 10%, 20%, or 30% between the first region and the second region, wherein hardness is measured according to ASTM D2240, flexural modulus according to ASTM D790, tensile strength according to ASTM D638, and elongation at break according to ASTM D412. The tube has a length-to-diameter (L/OD) ratio of about from 5 to 1,500. The polymer resin is selected from fluorine-based polymers, polyolefins, polyurethanes, styrenic polymers, polyesters, polyamides, vinyl polymers, polycarbonates, and mixtures thereof. The elastomer is selected from styrenic thermoplastic elastomers, styrenic thermoplastic olefins, polyolefin elastomers, ethylene-propylene rubber, thermoplastic polyurethanes, and mixtures thereof. The polymer resin and the elastomer differ in at least one of Shore A hardness, Shore D hardness, and flexural modulus by at least 20%, 25%, or 30 %, the hardness being measured according to ASTM D2240 and the flexural modulus according to ASTM D790.

In an aspect, a method of making a tube having an outside diameter (OD) is disclosed. The method comprises feeding a first composition having defined concentrations of components comprising, consisting essentially of, or consisting a polymer resin, an elastomer, and optional components to a first feeder of an extruder; feeding a second composition having defined concentrations of components comprising, consisting essentially of, or consisting a polymer resin, an elastomer, and optional components to a second feeder located downstream along a barrel of the extruder; optionally feeding one or more optional components to the primary feeder, secondary feeder, or both; controlling the relative feed rates of the first composition and the second composition during continuous extrusion to vary the concentrations of the polymer resin and elastomer components longitudinally and continuously along the extrusion direction, thereby forming a compositionally graded melt; and extruding the compositionally graded melt through a die to produce a tube in which at least one physical property selected from hardness, tensile strength, elongation at break, or flexural modulus differs by at least 10%, 20%, or 30% between the first region and the second region, wherein hardness is measured according to ASTM D2240, flexural modulus according to ASTM D790, tensile strength according to ASTM D638, and elongation at break according to ASTM D412. The first composition comprises, consists essentially of, or consists of 70-100 wt.% of a first polymer resin, 0-30 wt.% of a first elastomer, and 0-10 wt.% optional components. The second composition comprises, consists essentially of, or consists of 0-50 wt.% of a second polymer resin, same or different from the first polymer resin, 50-100 wt.% of a second elastomer, same or different from the first elastomer, and 0-10 wt.% optional components, same or different from the optional components in the first composition. The polymer resin is selected from the group of fluorine-based polymers, polyolefins, polyurethanes, styrenic polymers, polyesters, polyamides, vinyl polymers, polycarbonates and mixtures thereof. The elastomer is selected from the group of styrenic-based thermoplastic elastomers, styrenic-based thermoplastic olefins, polyolefin elastomers, ethylene propylene rubber, thermoplastic polyurethanes, and mixtures thereof. The polymer resin and the elastomer differ in at least one of Shore A hardness, Shore D hardness, and flexural modulus by at least 20 %, 25 %, or 30 %, the hardness being measured according to ASTM D2240 and the flexural modulus according to ASTM D790.

In an aspect, the tube is a catheter. The catheter comprises a compositionally graded structure in which hardness, tensile strength, and elasticity vary longitudinally along the tube length. In embodiments, the catheter has a length of 30-150 cm, an outer diameter of 1-10 mm, and an inner diameter of 0.5-5 mm. The hardness gradient ranges from Shore D of 60-90 at the first region (polymer resin-rich) to Shore A of 15-50 at the second region (elastomer-rich), providing improved pushability, torque response, and patient comfort during insertion and navigation through vascular pathways.

Each of the above transitional terms (e.g., 'comprising,' 'consisting essentially of,' and 'consisting of') is intended to carry its conventional meaning as understood in patent law, or defined when appropriate.

## BRIEF DESCRIPTION OF DRAWINGS

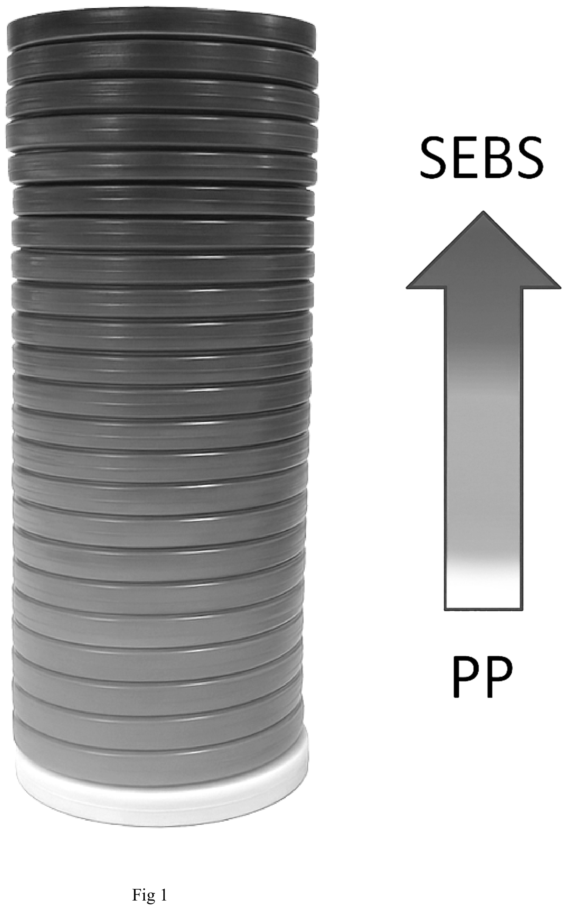

Figure 1 is a grayscale photograph of an extruded tubing segment, illustrating a continuous transition from a light, polymer resin-rich region to a dark elastomer-rich region along the extrusion direction, corresponding to the compositional and hardness gradient described herein.

## DESCRIPTION

The following terms will have the following meanings:
"Consisting essentially of" means that the composition primarily includes the recited components and may additionally contain one or more components that do not materially affect the novel characteristics or intended function of the invention. In embodiments, such additional components are present in amounts of < 30 wt.%, < 20 wt.%, or < 10 wt.%, based on total weight of the composition.

"At least one of [a group such as A, B, and C]" or "any of [a group such as A, B, and C]" means a single member from the group, more than one member from the group, or a combination of members from the group. For example, at least one of A, B, and C includes, for example, A only, B only, or C only, as well as A and B, A and C, B and C; or A, B, and C, or any other all combinations of A, B, and C.

A list of embodiments presented as "A, B, or C" is to be interpreted as including the embodiments, A only, B only, C only, "A or B," "A or C," "B or C," or "A, B, or C."

"Any of A, B, or C" refers to one option from A, B, or C.

"Any of A, B, and C" refers to one or more options from A, B, and C.

"Copolymer" refers to a polymer derived from more than one species of monomer.

"Block copolymer" refers to a copolymer that comprises more than one species of monomer, wherein the monomers are present in blocks. Each block is constituted of a set of monomer units different from the set of monomers of the connected (surrounding) blocks in the same block copolymer. Each block can be constituted of a homopolymer or a random copolymer.

"Vinyl aromatic unit content" or VAC of a block copolymer refers to the weight percentage of polymerized vinyl aromatic monomers, e.g., styrene, para-methylstyrene, etc., in the block copolymer. VAC is calculated by dividing the total molecular weight of all vinyl aromatic units by the total molecular weight of the block copolymer. It can be determined using proton nuclear magnetic resonance spectroscopy ($^1$H NMR) and/or $^{13}$C NMR. VAC is sometimes used interchangeably with PSC (polystyrene content).

"Butylene unit content" refers to the content, in weight percentage, of the butylene units ("B") relative to all diene-based units in a given polymer (e.g., hydrogenated block copolymer). The butylene units are formed through the polymerization of 1,3-butadiene monomer via 1,2-addition, followed by hydrogenation. The 1,3-butadiene monomer can also polymerize through 1,4-addition, which, upon hydrogenation, results in ethylene units ("E"). Both butylene and ethylene units can be present in the hydrogenated block copolymer, which can also contain vinyl aromatic units and/or other units derived from conjugated diene monomers, arranged in any order. The butylene unit content can be measured by 1H NMR and/or 13C NMR. The butylene unit ("B") content is sometimes used interchangeably with "vinyl content" prior to hydrogenation.

"Molecular weight" or Mw refers to the polystyrene equivalent molecular weight in kg/mol of a polymer block or a block copolymer. Mw can be measured with gel permeation chromatography (GPC) using polystyrene calibration standards, such as is done according to ASTM D5296. The GPC detector can be an ultraviolet or refractive index detector or a combination thereof. The chromatograph is calibrated using commercially available polystyrene molecular weight standards. Mw of polymers measured using GPC so calibrated are polystyrene equivalent molecular weights or apparent molecular weights. Mw expressed herein is measured at the peak of the GPC trace and is commonly referred to as polystyrene equivalent "peak molecular weight," designated as $M_p$.

"Hydrogenated SBC" or "HSBC" refers to a styrenic block copolymer (SBC) in which diene units are hydrogenated to a level > 90 mol%, or preferably > 95 mol%, or more preferably > 98 mol%, or < 100 mol%, and vinyl aromatic units are hydrogenated to < 20 mol%, or preferably < 10 mol%, or more preferably < 5 mol%.

"Hydrogenation level" refers to the level (in percentage) of saturation of the double bonds (e.g., olefinic, aromatic, etc.) into the block copolymer, can be measured by $^1$H NMR.

"Residual unsaturation" or RU refers to the levels of unsaturation, i.e., carbon-carbon double bonds per gram of a block copolymer. RU can be measured using $^1$H NMR or ozonolysis titration.

"Unit" refers to the structural building block derived from one or more polymerized monomers, representing the repeating entity that forms part of the polymer or copolymer chain. Unlike a "monomer," which is the individual molecule before polymerization, a "unit" is the transformed version of the monomer after undergoing the polymerization process.

"Coupling efficiency" or CE refers to the weight % of coupled polymer molecules relative to the total weight of both coupled and uncoupled polymer molecules. CE is expressed as a percentage (%) and can be used to estimate the content of diblock structures or, more generally, the proportion of "uncoupled arms" in the block copolymer. For example, a CE of 80% indicates that the block polymer contains 20 wt.% diblock (uncoupled) species and 80 wt.% triblock and multi-arm species.

"Polydispersity index" or PDI refers to a ratio of a weight average molecular weight ($M_w$) to a number average molecular weight ($M_n$), sometimes also called molecular weight distribution. PDI is used to indicate distribution of polymer chain molecular weights in a given polymer.

"Continuous" refers to a progressive change in composition or physical properties along a defined direction, such as the longitudinal or extrusion direction of the tube. A continuous variation is produced when the relative proportions of polymer resin, elastomer, and/or optional components are varied gradually over time or distance during extrusion, such that no discrete boundaries, weld lines, or fusion seams are present between regions of differing composition. Minor local fluctuations inherent to polymer melt mixing are included within the meaning of "continuous," provided that the overall transition occurs in a smooth and gradual along the defined direction.

"Differential," "variation," and "gradient" are used interchangeably to describe a measurable difference or change in composition and/or physical properties of the tube. Unless otherwise specified, these terms encompass both quantifiable differences between different longitudinal regions of the same tube (for example, between a first and a second region) and continuous transitions (for example, along the longitudinal or extrusion direction of the tube) in parameters such as polymer resin content, elastomer content, optional component concentration, hardness, tensile strength, elasticity, color intensity, or other physical or chemical characteristics.

A difference or variation in physical property values (for example, hardness or flexural modulus) between the polymer resin and the elastomer refers to a relative change calculated according to the following relationship:

$$\Delta P = \left| P_1 - P_2 \right| / P_1 \times 100 \ \%,$$

where $P_1$ and $P_2$ represent the measured property values of the polymer resin and the elastomer, respectively. Unless otherwise indicated, $P_1$ corresponds to the polymer resin, which typically exhibits the higher hardness or flexural modulus. The hardness values are determined according to ASTM D2240 (Shore A or Shore D scale, as appropriate), and the flexural modulus values are determined according to ASTM D790. A difference ($\Delta P$) of at least 20 %, 25 %, or 30 % indicates that the two components are mechanically distinct and capable of establishing a measurable hardness or stiffness gradient in the resulting tube.

The disclosure relates to tubes having a gradient of composition and properties along their length, and to methods for making such articles. The tube is formed from compositions comprising one or more polymer resin, one or more elastomer, and optional components. Relative concentrations of these components vary longitudinally and continuously along the extrusion direction to provide regions of differing physical characteristics - such as hardness, flexibility, color, or chemical resistance - without discrete junctions or welds.

In embodiments, a first region (polymer resin-rich or "hard" region) of the tube comprises a first composition containing 70-100 wt.% of a first polymer resin, 0-30 wt.% of a first elastomer, and 0-10 wt.% optional components, based on the total weight of the first composition. A second region (elastomer-rich or "soft" region) of the tube comprises a second composition containing 0-50 wt.% of a second polymer resin, same or different from the first polymer resin, 50-100 wt.% of a second elastomer, same or different from the first elastomer, and 0-10 wt.% optional components, based on the total weight of the second composition.

The tube is continuously extruded using an extruder equipped with multiple feeders, allowing the relative feed rates and/or component ratios of the polymer resin, elastomer, and optional components to be progressively varied during extrusion to establish the desired composition gradient. As used herein, the term "region" refers to a compositional zone or portion along the tube's length and does not necessarily correspond to a discrete physical boundary or end.

Polymer Resin: The tube comprises at least a polymer resin, which provides structural integrity, chemical resistance, barrier characteristics, and thermal stability to ensure durability, performance in tubing applications. The polymer resin can be a homopolymer or copolymer selected from the group of fluorine-based polymers, olefin-based polymers, polyurethanes, styrenic polymers, polyesters, polyamides, vinyl polymers, polycarbonates and mixtures thereof.

In certain embodiments, the polymer resin is biocompatible and suitable for use in medical or healthcare tubing in contact with bodily fluids, while in other embodiments, the resin is an industrial- or engineering-grade material chosen for mechanical strength, chemical or thermal resistance, optical clarity, or other functional requirements. The polymer resin contributes to the tube's ability to maintain dimensional stability, resist chemicals or sterilization processes, and provide a smooth internal surface for fluid or material transport.

Examples of fluorine-based polymers include polytetrafluoroethylene (PTFE), ethylene-tetrafluoroethylene copolymer (ETFE), and perfluoroalkoxy fluorine resin (PFA).

Olefin-based polymers include polyethylene, polypropylene, or mixtures thereof. In embodiments, olefin-based polymers include ethylene homopolymers, ethylene/alpha-olefin copolymers, propylene homopolymers, propylene/alpha-olefin copolymers, high impact polypropylene, butylene homopolymers, butylene/alpha olefin copolymers, and other alpha olefin copolymers or interpolymers. Representative polyolefins include, for example, but are not limited to, substantially linear ethylene polymers, homogeneously branched ethylene polymers, heterogeneously branched ethylene polymers, including linear low-density polyethylene (LLDPE), ultra or very low-density polyethylene (ULDPE or VLDPE), medium density polyethylene (MDPE), high density polyethylene (HDPE) and high-pressure low-density polyethylene (LDPE). Other olefin-based polymers included hereunder are ethylene/acrylic acid (EEA) copolymers, ethylene/methacrylic acid (EMAA) ionomers, ethylene/vinyl acetate (EVA) copolymers, ethylene/vinyl alcohol (EVOH) copolymers, ethylene/cyclic olefin copolymers, polyvinyl chloride (PVC) and blends of PVC with other materials.

Examples of polyurethanes include thermoplastic polyurethane (TPU), polycarbonate-based polyurethane, aromatic polyurethane, aliphatic polyurethane, thermosetting polyurethane, and mixtures thereof.

Examples of polyesters include polyethylene terephthalate, polybutylene terephthalate, polylactic acid, polycaprolactone, thermoplastic polyesters, and mixtures thereof.

Examples of polyamides include, but are not limited to, polyamide 6 (PA 6), polyamide 66 (PA 66), polyamide 46 (PA 46), polyamide 410 (PA410), polyether block amide (PEBA), and mixtures thereof.

Examples of styrenic polymers include acrylonitrile-butadiene-styrene (ABS), styrene-acrylonitrile (SAN), and polystyrene (PS).

Examples of vinyl polymers include polyvinyl chloride (PVC), polyvinyl acetate (PVAc), and related copolymers or mixtures.

Examples of polycarbonates include bisphenol-A polycarbonate, aromatic-aliphatic copolycarbonates, poly(ester-carbonate) copolymers, aliphatic polycarbonates such as poly(trimethylene carbonate) and poly(hexamethylene carbonate), and mixtures thereof.

In embodiments, the polymer resin has a tensile strength of > 5 MPa, or > 10 MPa, or > 15 MPa, or > 25 MPa, or > 30 MPa, or > 40 MPa, or < 120 MPa, or < 100 MPa, or < 90 MPa, or < 80 MPa, or < 70 MPa, 5-120 MPa, or 10-100 MPa, or 25-90 MPa, or 25-75 MPa, or 30-70 MPa, according to ASTM D638. Lower values are typical of flexible or elastomer-modified resins (e.g., thermoplastic polyurethanes, vinyl polymers, or soft polyolefins), whereas higher values are characteristic of rigid engineering resins such as polyamides, polyesters, or high-crystallinity polyolefins.

In embodiments, the polymer resin has a flexural modulus of > 50 MPa, or > 100 MPa, or > 250 MPa, or > 750 MPa, or > 1,000 MPa, or >1,200 MPa, or < 6,000 MPa, or < 5,000 MPa, or 50-6,000 MPa, or 100-5,000 MPa, or 750-4,000 MPa, or 1,000-4,000 MPa, or 1,000-3,500 MPa, according to ASTM D790.

In embodiments, the polymer resin has a Young's modulus > 10 MPa, or > 15 MPa, or > 25 MPa, or > 50 MPa, or < 5,000 MPa, or < 4,000 MPa, or < 3,500 MPa, or 10-5,000 MPa, or 25-4,000 MPa, or 50-3,500 MPa, according to ASTM D638. The lower end of this range corresponds to more flexible resins such as thermoplastic polyurethanes, vinyl polymers, or elastomer-modified polyolefins, while the upper end corresponds to rigid resins such as polyamides, polyesters, or high-crystallinity polyolefins.

The tube is characterized by a gradient distribution of the concentration of the polymer resin along its length. In embodiments, the first region of the tube comprises a first composition having defined concentrations of components comprising 70-100 wt.%, or 75-100 wt.%, or 80-100 wt.% of a first polymer resin based on the total weight of the first composition; the second region comprises a second composition having defined concentrations of components comprising a lesser amount of a second polymer resin, e.g., 0-50 wt.%, or 10-40 wt.%, or 15-35 wt.%, based on the total weight of the second composition.

The gradient distribution can be achieved by varying the amount of the polymer resin or by varying the type or blend of polymer resin as a function of the tube length. In embodiments, the gradient is formed by the introduction of a different polymer resin, or polymer resin blend through a secondary (side) feeder, thereby forming a continuous transition between regions of different composition. For example, a first composition at one end of the tube may comprise polyamide, while a second composition downstream may comprise a mixture of polyamide and polyester, and a third composition further downstream may comprise a blend of polyamide, polyester, and a second polymer resin.

Elastomers: The tube comprises at least one elastomer, which provides flexibility, elasticity, and softness, enabling the tube to bend, stretch, and compress without permanent deformation while maintaining dimensional stability and performance during handling or use. The elastomer enhances flexibility, impact resistance, and comfort in both medical and non-medical applications.

The elastomer is selected from the group of styrenic-based thermoplastic elastomers (TPE), styrenic-based thermoplastic olefins (TPO), polyolefin elastomers (POE), ethylene propylene rubber (EPR), thermoplastic polyurethanes, and mixtures thereof.

In embodiments, the elastomer is functionalized or modified to enhance compatibility or performance for specific applications. Functionalization involves introducing reactive or polar groups such as hydroxyl, carboxylic acid and salts, anhydrides, esters, imides, amides, epoxy groups, acid chlorides, and other polar moieties into the elastomer structure.

Examples of styrenic-based thermoplastic olefins include styrene-ethylene-propylene-styrene (SEPS), styrenic polyolefin blends, propylene-styrene blends, styrenic TPOs, and mixtures thereof.

Examples of styrenic-based thermoplastic elastomers (TPEs) include unhydrogenated and hydrogenated forms of styrenic block copolymers (SBCs) such as styrene-ethylene/butylene-styrene (SEBS), styrene-ethylene/propylene-styrene (SEPS), styrene-butadiene-styrene (SBS), styrene-isoprene-styrene (SIS), styrene-butylene-styrene, styrene-polyolefin block copolymers, and mixtures thereof.

In embodiments, the elastomer is a styrenic block copolymer ("SBC"). The styrenic block copolymer has a general configuration of: A-B, A-B-A, B-A-B, A-B-A-B, A-B-A-B-A, $(A-B)_n$, $(A-B)_n(A)$, $(A-B-A)_n$, $(A-B-A)_nX$, $(A-B)_nX$, $(B-A-B)_nX$, $(A-B-A-B)_nX$, $(A-B-A-B-A)_nX$, A-B', A-B'-A, B'-A-B, B-A-B', B'-A-B', A-B'-A-B, A-B-A-B', A-B'-A-B', A-B'-A-B-A, A-B-A-B'-A, A-B'-A-B'-A, $(A-B')_n$, $(A-B')_n(A)$, $(A-B'-A)_n$, $(A-B'-A)_nX$, $(A-B')_nX$, $(B'-A-B)_nX$, $(B-A-B')_nX$, $(B'-A-B')_nX$, $(A-B'-A-B)_nX$, $(A-B-A-B')_nX$, $(A-B'-A-B')_nX$, $(A-B'-A-B-A)_nX$, $(A-B-A-B'-A)_nX$, $(A-B'-A-B'-A)_nX$, or mixtures thereof; where n is an integer from 2 to 30; and X is a residue of a coupling agent.

Each block A is a polymer block of vinyl aromatic monomer. Each block B is polymer block of a conjugated diene monomer or a mixture of two or more conjugated diene monomers, each block B' is a polymer block consisting of at least one vinyl aromatic monomer and conjugated diene monomer. The mixture of vinyl aromatic monomer and conjugated diene monomer in each block B' can be any of tapered, random, block structure, or a controlled distribution copolymer block.

In embodiments, the vinyl aromatic monomer is selected from the group consisting of styrene, para-methylstyrene, para-ethylstyrene, para-n-propylstyrene, para-iso-propylstyrene, para-n-butylstyrene, para-sec-butylstyrene, para-iso-butylstyrene, para-t-butylstyrene, isomers of para-decylstyrene, isomers of para-dodecylstyrene, ortho-substituted styrene, meta-substituted styrene, alpha-methylstyrene, 1,1-diphenylethylene, and mixtures thereof.

In embodiments, the conjugated diene monomer is selected from the group consisting of isoprene, 1,3-butadiene, 2,3-dimethyl-1,3-butadiene, 1-phenyl-1,3-butadiene, 1,3-pentadiene, 1,3-hexadiene, 3-butyl-1,3-octadiene, farnesene, myrcene, piperylene, cyclohexadiene, and mixtures thereof.

In embodiments, the coupling agent includes bi- or polyfunctional compounds, for example divinylbenzene, halides of aliphatic hydrocarbons, such as 1,2-dibromoethane, bis(chloromethyl)benzene, silicon tetrachloride, dialkyl- or diarylsilicon dichloride, alkyl- or arylsilicon trichloride, tin tetrachloride, alkylsilicon methoxides, alkyl silicon ethoxides, polyfunctional aldehydes, such as terephthalic dialdehyde, ketones, esters, anhydrides, or epoxides. In embodiments, the coupling agent is selected from methyltrimethoxysilane, methyltriethoxysilane, tetramethoxysilane, dimethyladipate, gamma-glycidoxypropyltrimethoxy silane, and mixtures thereof.

In embodiments, each block A and A' independently has a peak molecular weight of >1 kg/mol, or > 5 kg/mol, or > 7 kg/mol, or > 10 kg/mol, or > 15 kg/mol, or > 30 kg/mol, or > 40 kg/mol, or > 50 kg/mol, or > 75 kg/mol, or > 100 kg/mol, or < 200 kg/mol, or < 150 kg/mol, or < 100 kg/mol, or 1-200 kg/mol, or 1-150 kg/mol, or 1-100 kg/mol, or 1-75 kg/mol, or 1-50 kg/mol.

In embodiments, each block B and B' independently has a peak molecular weight of > 5 kg/mol or > 10 kg/mol, or > 15 kg/mol, or > 25 kg/mol, or > 50 kg/mol, or < 100 kg/mol, or < 250 kg/mol, or 5-350 kg/mol, or 5-300 kg/mol, or 7-250 kg/mol, or 10-200 kg/mol, or 5-150 kg/mol, or 10-100 kg/mol.

In embodiments, the SBC has a total peak molecular weight of 5-1000 kg/mol, or 5-750 kg/mol, or 10-500 kg/mol, or 20-300 kg/mol, or 50-300 kg/mol, or 50-250 kg/mol, or < 750 kg/mol, or < 500 kg/mol, or > 5 kg/mol, or > 10 kg/mol.

In embodiments, the SBC is a hydrogenated styrenic block copolymer ("HSBC"). The HSBC has a general configuration selected from: S-E/B-S, (S-E/B)$_n$X, (S-E/B-S)$_n$X, S-EP-S, (S-EP)nX, (S-EP-S)nX, S-E/B/S-S, (S-E/B/S-S)$_n$X, (S-E/B/S)$_n$X, S-EP/S-S, (S-EP/S-S)$_n$X, (S-EP/S)$_n$X, and mixtures thereof, with n = an integer of 2 to 30 and X is residual coupling agent. The HSBC is formed by hydrogenation of a styrenic block copolymer (SBC) precursor which is any of linear, branched, or radial block copolymer. The HSBC can be partially or fully hydrogenated.

Each block "S" is a polymer block composed of vinyl aromatic units. Each block E/B is a polymer block composed of ethylene ("E") units and butylene ("B") units. Each block EP is a polymer block composed of ethylene-propylene ("EP") units. Each block E/B/S is a polymer block composed of ethylene ("E") units / butylene ("B") units / and vinyl aromatic ("S") units. Each block EP/S is a polymer block composed of ethylene-propylene ("EP") units and vinyl aromatic ("S") units. A vinyl aromatic monomer can be introduced or copolymerized with diene monomer by any order and in any distribution to form any of configurations as described.

In embodiments, the HSBC is functionalized with at least one functional group, e.g., hydroxyl group, amino group, carboxyl group, acid anhydride group, epoxy group, isocyanate group, silanol group, silane group, and the like.

In embodiments, the HSBC comprises a mixture of at least two block copolymers selected from the group consisting of diblock, triblock, tetrablock, and pentablock copolymers. In embodiments, the di-block copolymer constitutes from 1-40, or 2-35, or 3-15, or 15-35, or > 3, or < 35 wt.%; the tri-block copolymer constitutes from up to 99 wt.%, or 60-99, or 65-98, or 85-97, or 65-85, or > 65, or < 97 wt.%; and the tetrablock copolymer constitutes from 0-70, or 2-20, or 4-15 wt.%, based on total weight of the HSBC.

In embodiments, the HSBC has a coupling efficiency (CE) of 20-98%, or > 20%, or < 99%.

In embodiments, each block E/B independently has a residual unsaturation (RU) of 0-0.5, or 0.01-0.4, or 0.05-0.5, or < 0.5, or < 0.4, or < 0.3, or < 0.2, or < 0.1 meq/g, measured by $^1$H NMR.

In embodiments, the HSBC has a butylene unit ("B") content of 30-90, or 35-85, or 40-80, or > 35, or < 85 wt.%, based on total weight of the block E/B.

In embodiments, the HSBC has a total VAC of 5-45, or 8-40, or 10-35, or > 8, of > 10, or < 40 wt.%, based on total weight of the HSBC.

In embodiments, each block "S" has a molecular weight ($M_p$) of 2-20, or 3-18, or 4-15, or 3-12, or > 2, or > 4, or < 15 kg/mol.

In embodiments, block E/B (if present) has a molecular weight ($M_p$) of 90-240, or 95-230, or 100-220, or 110-210 kg/mol.

In embodiments, the HSBC has a molecular weight ($M_p$) of 50-250, or 60-225, or 70-225 kg/mol.

In embodiments, the HSBC has a melt flow rate (MFR) of 1-30, or 5-30, or 10-30, or 15-25 g/10min, measured at 230°C with 5 kg load according to ASTM D1238.

In embodiments, the HSBC has a general structure of S-E/B-S, (S-E/B)nX, (S-E/B-S)nX having a butylene unit ("B") content of 30-60, or 35-55, or 40-50 wt.%, a VAC of 5-25, or 5-20, or 5-15, or 10-15 wt.%, a Mp of block "S" of 3-12, or 3-10 kg/mol, a Mp of block copolymer of 100-200, or 125-175, or 130-160 kg/mol, a coupling efficiency of 60-85, or 60-80, or 65-75%, a di-block content of 10-50, or 20-40, or 25-35 wt.%, a MFR of 5-30, or 10-25, or 15-25 g/10min at 230°C/5 kg, a tensile strength of 5-40, or 10-35, or 15-30, or 20-25 MPa, a elongation at break of 550-850, or 600-800, or 700-800%, a Shore A hardness of 30-60, or 35-60, or 35-55, or 40-55 (measured after 10s).

The elastomer may comprise a mixture of one or more unmodified elastomers and one or more modified or functionalized elastomers. For example, the elastomer component may include a blend of a styrenic-based thermoplastic elastomer (TPE), a polyolefin elastomer (POE), or a thermoplastic polyurethane (TPU), with a maleic anhydride-modified or hydroxyl-modified SBC to improve interfacial compatibility with the polymer resin phase.

In embodiments, the elastomer has an elongation at break of > 100%, or > 150%, or > 200%, or > 250%, or > 300%, 150-1,000%, or 200-800%, or 250-750%, or 300-700%, according to ASTM D412.

In embodiments, the elastomer has a Shore A hardness of 10-70, or 10-60, or 15-55, or 20-55, or 20-50, according to ASTM D2240.

In embodiments, the elastomer has a tensile strength of > 2 MPa, or > 5 MPa, or > 10 MPa, or < 40 MPa, or < 35 MPa, or 2-40 MPa, or 5-30 MPa, or 10-25 MPa, according to ASTM D412.

In embodiments, the elastomer has a Young's modulus > 1 MPa, or > 2 MPa, or > 5 MPa, or > 10 MPa, or < 100 MPa, or < 80 MPa, or < 60 MPa, or < 55 MPa, or 1-100 MPa, or 2-80 MPa, or 2-60 MPa, or 5-60 MPa, according to ASTM D638.

In embodiments, the first region (polymer resin-rich end) comprises a first composition having defined concentrations of components comprising 0-30 wt.%, or 0-25 wt.%, or 0-20 wt.% of a first elastomer, and the second region (elastomer-rich end) comprises a second composition having defined concentrations of components comprising 50-100 wt.%, or 60-90 wt.%, or 65-85 wt.% of a second elastomer, based on the total weight of the respective region. The variation in elastomer composition can result from a difference in concentration, type, or mixture of elastomers introduced via secondary feeders.

The gradient distribution of the elastomer content or composition can be achieved by varying the feed rate or introducing different elastomer types or blends as a function of extrusion distance or time. For example, a first region of the tube may comprise primarily polymer resin, while a second region downstream may comprise a mixture of two or more elastomers such as a polyolefin elastomer, a styrene-based thermoplastic elastomer, and a thermoplastic polyurethane.

Other Components: The resin composition optionally includes one or more additional components selected to modify processing behavior, mechanical performance, surface properties, appearance, or chemical resistance of the extruded tube. Suitable optional components include, for example, antioxidants, adhesion promoters, ultraviolet light stabilizers, heat stabilizers, rheology modifiers, biocides, corrosion inhibitors, dehydrators, colorants (e.g., pigments and dyes), fillers, surfactants, flame retardants, and combinations thereof. Additional suitable optional components include, for example, antistatic agents, lubricants or processing aids, slip or anti-block additives, nucleating agents, reinforcing fibers, foaming or blowing agents, electrically or thermally conductive fillers (e.g., carbon black, graphite, metal flakes), and permeation-barrier or oxygen-scavenging additives.

In embodiments, optional components are included in the first composition, the second composition, or both. The total amount of optional components in any given composition is 0-10 wt.%, or at least 1 wt.%, or > 2 wt.%, or < 10 wt.%, or < 8 wt.%, based on the total weight of that composition. The type and concentration of these components may also vary along the length of the tube by adjusting the feed rate or composition introduced through one or more side feeders, thereby providing a functional or visual gradient (for example, stiffness, color, UV resistance, or conductivity) along the tube.

Method for Making: The polymer resin and elastomer are fed into an extruder using at least two feeders positioned along the barrel of the extruder. The first feeder (main or primary feeder) is located upstream of a second feeder (secondary or side feeder). In embodiments, one or more additional side feeders are positioned along the length of the barrel for the addition of varying components or modifiers. In embodiments, the extruder is a twin-screw extruder configured to provide sufficient mixing and shear without degradation of the components. In other embodiments, the extruder is a co-extrusion apparatus configured with multiple feed ports but a single flow channel and common die, wherein the component streams are merged within the barrel to form a unified melt. The relative flow rates or compositions of the component streams are varied over time to establish a longitudinal composition gradient along the extrusion direction. The barrel may include multiple temperature-controlled zones, each maintained at a temperature of about 150-250°C, or 170-230°C, increasing progressively toward the die.

In embodiments, polymer resin is introduced through a primary feeder, and an elastomer is metered through a secondary feeder at a controlled rate to generate a desired concentration profile along the length of the tube. The feed rate of the elastomer may be progressively increased or decreased relative to the polymer resin to achieve a smooth compositional transition along the length of the tube. In embodiments, the secondary feeder is positioned at a barrel section between approximately 60-90%, or 60-80% of the barrel length downstream from the main hopper. In embodiments, the extrusion process begins with either the polymer resin-rich composition or the elastomer-rich composition, such that the tube is produced starting from either the harder region or the softer region, with the compositional gradient developing longitudinally and continuously in the extrusion direction. In other embodiments, the feed configuration is reversed, such that the elastomer is introduced through the primary feeder and the polymer resin is introduced through the secondary feeder, thereby forming a similar compositionally graded structure in the opposite direction.

In embodiments, the compositional gradient is generated by progressively varying the feed rates of the polymer resin and the elastomer during continuous extrusion. The relative proportions of the components are adjusted gradually over time so that the melt composition evolves continuously along the extrusion direction, producing a longitudinal gradient in composition and corresponding changes in hardness, tensile strength, or elasticity. This time-dependent feed-rate control differs from typical co-extrusion, which forms gradients or multilayer structures by simultaneous delivery of multiple polymer melts through separate channels, requiring precise flow synchronization and interfacial compatibility. The present process instead produces a smooth, controllable gradient using a single extrusion stream.

In other embodiments, both polymer resin and elastomer are co-fed through the primary feeder while an elastomer (the same or different), a polymer resin, or a masterbatch thereof is introduced through the secondary feeder to further adjust the composition or concentration gradient. The secondary feeder may employ a volumetric, gravimetric, or vibratory feeding mechanism operating at, for example, 100-1000 rpm, or 200-600 rpm, or 300-600 rpm, with the overall feed rate of the extruder ranging from 2-10 kg h$^{-1}$, or 2-8 kg h$^{-1}$, or 4-6 kg h$^{-1}$.

In embodiments, the primary feeder delivers a masterbatch comprising polymer resin and elastomer, while the secondary feeder meters an elastomer (same or different) or a masterbatch thereof into the extruder at a controlled rate to establish the gradient. The ratio of feed from the secondary feeder to the primary feeder may vary from 0.1:1 to 1: 1 over the course of extrusion, or such that the concentration of elastomer in the extrudate increases or decreases by at least 10-50 wt.% between the first and second regions.

In embodiments, both the primary and secondary feeders introduce masterbatches - each comprising polymer resin and elastomer, optionally differing in elastomer type, ratio, or colorant concentration - to obtain a desired gradient of concentration, hardness, or color along the extruded tube.

The optional components may be incorporated through one or more additional side feeders (typically located downstream of the secondary feeder) or premixed into the primary and/or secondary feed streams. The third feeder may introduce any of the polymer resin, elastomer, or optional components to fine-tune the gradient or to add functional or colorant additives.

In embodiments, the tube is continuously extruded while the polymer resin, elastomer and optional components are fed into the extruder, resulting in a first region containing a first proportion of polymer resin and a second region containing a higher proportion of elastomer. The first region comprises a first composition having defined concentrations of components comprising 70-100 wt.%, or 75-100 wt.%, or 80-100 wt.% of a first polymer resin; 0-30 wt.%, or 0-25 wt.%, 0-20 wt.% of a first elastomer; and 0-10 wt.% optional components, while the second region comprises a second composition having defined concentrations of components comprising 0-50 wt.%, or 10-40 wt.%, or 15-35 wt.% of a second polymer resin, same or different from the first polymer resin; 50-100 wt.%, or 60-90 wt.%, or 65-85 wt.% of second elastomer, same or different from the first elastomer; and 0-10 wt.% optional components, same or different from the optional components in the first composition.

In embodiments, the die temperature is maintained between 200-240°C, and the screw speed is 100-600 rpm, depending on resin viscosity and desired mixing intensity. Cooling of the extrudate may occur in an air or water bath at 20-40°C.

The process can also be operated in a continuous or semi-continuous mode, in which the extruder produces an uninterrupted extrudate that is subsequently cut into individual tube sections, each section having a defined gradient length corresponding to the desired product size. Each tube is formed as an integral, weld-free segment of the continuous extrusion. In embodiments intended for continuous production of medical or industrial tubing having alternating "hard" and "soft" ends, the extrusion system is operated under programmed control so that the ratio of polymer resin to elastomer is varied cyclically as a function of extrusion time. In embodiments, the primary and secondary feeders are operated under gravimetric or loss-in-weight control connected to a programmable logic controller or supervisory control system that synchronizes the feed-rate profile with the extrusion line speed. The ratio of polymer resin to elastomer is increased or decreased continuously over a defined period corresponding to a target tube length, for example, 4 inches to 12 ft (0.1 m to 3.6 m), or 4 inches to 8.2 ft (0.1 m to 2.5 m), such that each length of extrudate comprises a first region rich in polymer resin (hard end) and a second region rich in elastomer (soft end). The programmed feed-rate waveform is repeated at fixed intervals to generate successive hard-to-soft gradient segments, enabling continuous manufacture and automatic cutting of discrete tubes of the desired length.

To ensure that the transition occurs at the intended position along the tube, the control system may incorporate a residence-time offset that compensates for the melt-lag between the feeders and the die. Line-speed feedback from an encoder or haul-off unit may be used to phase-lock the ratio change and the cutting operation so that each tube is severed at the same composition phase. This approach allows large-scale, continuous extrusion of tubes with one hard and one soft end, without manual changeover or welding, while maintaining compositional limits consistent with the first- and second-region ranges defined herein.

In embodiments, the extrusion control profile is programmed such that the compositionally graded melt extends over a defined portion of the total tube length, for example, over at least 30 %, 40 %, or 50 % of the tube length, resulting in a measurable change in at least one property (e.g., hardness, tensile strength, elasticity) between regions separated by said distance.

Applications: The tubes described herein can be used in a wide range of applications where a continuous or gradual variation in physical properties (for example, hardness, flexibility, color, or chemical resistance) along the length of the tube is desirable. In embodiments, the tubes can be single-lumen, multi-lumen, or multi-layer constructions.

In medical applications, the tubes can be used in or as components of catheters and other devices such as infusion sets, blood transfusion lines, peritoneal dialysis tubing, intravascular and balloon catheters, suction or drainage tubes, and protective sheaths or coverings.

In industrial applications, the tubes can be used for conveying or protecting fluids, gases, or wires, such as in pneumatic or hydraulic systems, fuel or coolant transport lines, and sensor housings. Tubes having a hardness or flexibility gradient can be advantageous in vibration-damping conduits, flexible-rigid transition joints, and hose segments where one end requires higher stiffness for coupling and the other requires higher flexibility for motion or shock absorption.

In automotive and transportation applications, the tubes can be used in brake or fuel systems, wire harness protection, cable management, or exhaust or ventilation systems where controlled mechanical performance or temperature tolerance gradients are beneficial.

In consumer and household products, the tubes can be used in appliances, sports equipment, and flexible packaging, for example, gradient-hose connectors, color-gradient drinking straws, or protective tubing for electronics.

In industrial and specialty processing, the tubes can be used as extrusion profiles, coatings, or liners for conveying corrosive materials or as optical or color-indicating tubes in quality control systems.

In all embodiments, the composition and method allow the gradient to be generated in a single continuous extrusion process, without joining separate tube sections, thereby simplifying manufacturing and improving reliability and visual uniformity.

Properties: In embodiments, the tube length comprising a first region and a second region exhibits a gradient differentiation with respect to one or more optional components of the composition, such as the polymer resin, elastomer, or optional additives. The compositional variation results in a measurable differentiation in at least one physical property, for example, hardness, tensile strength, elasticity, density, or color intensity, along the length of the article.

In embodiments, the hardness differentiation between the first and second regions is at least 10%, or at least 20%, based on Shore hardness values measured according to ASTM D2240.

In embodiments, the tube exhibits a longitudinal hardness gradient ranging from 20 Shore A to 80 Shore D, or 30 Shore A to 70 Shore D, or 40 Shore A to 60 Shore D, according to ASTM D2240.

In embodiments, the tube exhibits a Shore D hardness of 60-90, or 65-90, or 70-90, or 75-85, or > 60, or > 75 at the first region (resin-rich end), and a Shore A hardness of 15-50, or 15-40, or 15-30, or 15-25, or > 15, or < 50 at the second region (elastomer-rich end), according to ASTM D2240.

In embodiments, the tube length exhibits a gradient differentiation in tensile strength of > 20%, or > 30%, or > 40%, or > 50%, or > 60% from the first region of the tube to the second region. "Gradient differentiation" refers to an intentional and controlled variation in composition or property at a particular position along the length of the tube, enabling tailored performance characteristics such as increased stiffness at one region and increased flexibility, softness, or impact resistance at another.

In certain embodiments, the tube further exhibits a gradient differentiation in elastic modulus, elongation at break, flexural modulus, or impact strength, wherein at least one of these mechanical properties changes by at least 10, or > 15, or > 25, or 10-50% from one region of the tube to the other.

The tube produced according to the above method may have any desired configuration, including single-lumen, multi-lumen, or multilayer structures.

There is no particular limitation on the size, number of lumens, shape or cross-section and size of the tube produced from the composition. In embodiments, the outer diameter of the tube is 1-60 mm, or 1-20 mm, or 1-10 mm, the inner diameter of the tube is 0.5-50 mm, or 0.5-25 mm, or 0.5-10 mm, or 0.5-5 mm, and the wall thickness of the tube is 0.1-20 mm, or 0.5-10 mm, or 1-5 mm.

The overall length may vary from less than 30 cm to several meters, depending on the intended use. In embodiments, the tube has a length of 30-150 cm, or 30-140 cm, or 40-130 cm, or < 150 cm, or < 145 cm, or < 140 cm, or < 135 cm, or < 130 cm, or > 35 cm, or > 40 cm, or > 45 cm. In embodiments for veterinary or industrial use, the tube has a length of > 150 cm, or 150-750 cm, or 150-500 cm, or < 1000 cm, or < 750 cm, or < 600 cm.

In embodiments, the L/OD (ratio of length (L) of the tube to its outer diameter (OD)) is from 5-1,500, or 5-1,000, or 5-800, or 10-800, or 10-500, or 30-500, or 30-400, or 30-300, or at least 30, > 35, or > 40, or < 1,500, or < 1,250, or < 1,000.

In embodiments, the tube is a catheter. The catheter has a length of 30-150 cm, or 30-140 cm, or 40-130 cm, or < 150 cm, or < 145 cm, or < 140 cm, or < 135 cm, or < 130 cm, or > 35 cm, or > 40 cm, or > 45 cm, an outer diameter of 1-60 mm, or 1-20 mm, or 1-10 mm, and an inner diameter of 0.5-50 mm, or 0.5-25 mm, or 0.5-10 mm, or 0.5-5 mm.

In embodiments, the tube exhibits a gradient in visual or optical properties, such as color, gloss, or transparency, when a colorant concentration or pigment ratio is varied between the feed streams. The color change may be perceptible as a continuous color transition or as a functional color indicator corresponding to the compositional or hardness gradient.

Analytical Methods: The analytical methods described below are used to determine the composition, structure, and physical properties of the tubes, polymer resins, elastomers, and optional components described. These methods may also be used to confirm the presence of a compositionally graded structure and to establish quantitative differences between regions of the tube for enforcement or verification purposes.

(Component Analysis and Quantification): The concentration, identity, and distribution of each component - polymer resin, elastomer, and optional components - within a given region of the tube can be determined using thermogravimetric analysis (TGA), Fourier transform infrared spectroscopy (FTIR), Raman spectroscopy, differential scanning calorimetry (DSC), or nuclear magnetic resonance spectroscopy (NMR). Distinct spectral or thermal features characteristic of each component are identified and used to quantify relative weight percentages through calibration standards or spectral deconvolution.

(Chemical Differentiation and Separation): When the polymer resin and elastomer are chemically distinct (for example, polypropylene versus styrenic block copolymer), they are readily distinguished by FTIR or Raman spectroscopy based on their functional-group absorptions or scattering bands. When the components are chemically similar (for example, polyolefin-based systems), selective dissolution, solvent extraction, or thermal fractionation may be used to separate resin-rich and elastomer-rich fractions. The recovered fractions can be analyzed by gravimetry or by gel permeation chromatography (GPC) or size exclusion chromatography (SEC) to establish component ratios and molecular-weight distributions.

(Component Isolation and Phase Assignment): The isolated or enriched fractions are characterized by spectroscopic (FTIR, Raman, NMR) and thermal (DSC, TGA) analyses to assign each component to its corresponding polymer family, such as polyolefin, polyurethane, or styrenic block copolymer. In systems where direct separation is not practical, component identity is inferred from characteristic spectral, thermal, or crystallinity signatures unique to each polymer class.

(Verification of Longitudinal Variation): These analytical methods may be applied to small sections taken along the tube's length to verify longitudinal compositional variation. Changes in spectral intensity ratios, melting or glass-transition temperatures, or decomposition profiles along the extrusion direction indicate a continuous shift in polymer resin and elastomer concentration consistent with a compositionally graded structure.

(Compositional Mapping and Gradient Verification): Spatially resolved analyses such as FTIR mapping, Raman line scanning, micro-DSC, or energy-dispersive X-ray spectroscopy (EDX) mapping may be used to create a compositional profile along the tube. The relative intensity of characteristic peaks or elemental signals attributable to the polymer resin and elastomer is plotted versus position, confirming a continuous gradient. The absence of abrupt discontinuities distinguishes the tubes of this disclosure from welded constructions.

(Additive and Optical Gradients): Colorant, filler, or additive gradients may be quantified using UV-visible spectrophotometry or X-ray fluorescence (XRF) for elemental pigments or metals. When plotted versus position, these data confirm a continuous change in additive concentration or optical intensity along the tube.

(Molecular and Structural Characterization): The molecular weights of polymer resins and elastomers (including block copolymers) are measured by GPC in accordance with ASTM D5296, calibrated with polystyrene standards. The vinyl aromatic content, butylene content, and hydrogenation level of styrenic block copolymers (SBCs or HSBCs) are determined by proton and carbon NMR ($^1$H and $^{13}$C NMR). Coupling efficiency is derived from the ratio of coupled to uncoupled species in the GPC trace. Residual unsaturation or hydrogenation level may be confirmed by ozonolysis titration, UV-visible spectroscopy, or NMR integration of olefinic peaks.

(Thermal and Morphological Analysis): The melting temperature (Tm), glass transition temperature (Tg), and crystallinity of the polymer resin or elastomer are determined by DSC according to ASTM D3418. The degree of crystallinity may serve as an indicator of local composition. Phase morphology and elastomer dispersion within the polymer matrix are observed by scanning or transmission electron microscopy (SEM or TEM) after cryo-fracturing and selective staining (for example, osmium tetroxide staining of polyolefin elastomer domains).

(Density Variation): Density gradients along the tube may be measured by pycnometry (ASTM D792) or density-gradient column analysis, providing indirect evidence of compositional variation.

(Mechanical and Physical Property Measurements): Tensile properties, including tensile strength, elongation at break, and Young's modulus, are measured according to ASTM D638 for rigid or semi-rigid materials, or ASTM D412 for elastomeric materials. Flexural modulus is determined by ASTM D790, and impact strength by ASTM D256 (Izod) or ASTM D6110 (Charpy). Dynamic mechanical analysis (DMA) (ASTM D4065) may be used to characterize viscoelastic behavior and to capture gradient effects.

(Hardness and Gradient Quantification): Hardness is measured according to ASTM D2240 using the Shore A or Shore D scale, as appropriate. Measurements are taken at incremental distances along the tube to establish a quantitative hardness profile. A difference of at least 10 %, 20 %, or 30 % between the first and second regions confirms the required property gradient. Tensile strength or modulus differentials of 20-60 % are confirmed according to ASTM D638 or D412.

(Component Property Comparison): The inherent Shore hardness or flexural modulus of the polymer resin and elastomer may be determined from direct measurement, where feasible, or estimated on the basis of recognized reference data, including supplier technical datasheets, published literature, or standard material property databases, each determined in accordance with ASTM D2240 and D790. Where the polymer resin and elastomer cannot be physically separated from the tube without altering their composition or structure, the respective property values may be taken from such recognized sources for the identified materials under comparable testing conditions. The requirement that the polymer resin and elastomer differ by at least 20 %, 25 %, or 30 % in one of these properties is satisfied when the measured or referenced values demonstrate such a difference. This may be further supported by micro-indentation or localized mechanical testing of resin-rich and elastomer-rich regions within the tube.

(Dimensional Analysis): The tube's outside diameter (OD) and overall length are measured with precision calipers, optical micrometers, or laser gauges in accordance with ASTM D3567 or equivalent standards. The length-to-diameter (L/OD) ratio is calculated by dividing total tube length by OD.

(Optical and Surface Characterization): Surface gloss and transparency gradients are evaluated by glossmeter (ASTM D523) and haze or transmittance testing (ASTM D1003). Visual indicators such as color or opacity changes along the tube length may also corroborate compositional gradients.

(Gradient Continuity Assessment): To confirm the presence of a continuous compositional or property gradient, measurements of hardness, color intensity, tensile strength, or modulus are plotted as a function of position along the tube length. A statistically monotonic trend, without discontinuities, indicates a compositionally graded structure as defined herein.

<u>Examples:</u> The following examples are intended to be non-limiting.

Example 1: Extrusion of an Article with a Hardness Gradient

A sample was prepared using a 26-mm twin-screw co-rotating extruder having thirteen (13) barrel sections, with the first (feed) section unheated. The temperature profile of the remaining twelve heated zones along the barrel was as follows (°C): 170 / 180 / 190 / 200 / 210 / 210 / 220 / 220 / 220 / 220 / 220 / 220.
The screw speed was maintained at 300 rpm with a total feed rate of approximately 5 kg $h^{-1}$. A "recycling screw" configuration was employed to provide a moderate level of shear.

The extruder was equipped with two feeding ports:

Feeder 1: Main hopper (single-screw feeder) located at the feed section.

Feeder 2: Side feeder positioned at barrel section 11, utilizing vibration feeding technology.

A slit die (24 mm × 2 mm) was used to extrude a tape (or tubing). The materials employed were:

Table 1:

| Feeder | Material | Description | Color (pre-colored) |
|---|---|---|---|
| 1 | PP | A highly crystalline polypropylene homopolymer having a melt flow rate of 20 g / 10 min (230°C / 2.16 kg), a density of 905 kg $m^{-3}$, a flexural modulus of 2000 MPa, a tensile stress at yield of 40 MPa, a heat-deflection temperature (0.45 MPa) of 115°C, and a Shore A hardness of ~ 90. | Light color |
| 2 | HSBC | A hydrogenated styrenic block copolymer having a $(S-EB)_2$ configuration, with a total peak molecular weight of 145 kg/mol, a styrene molecular weight of 5,300 g/mol, a VAC of 13.3, a coupling efficiency of 71%, a butylene content of 44%, a MFR at 5 kg and 230°C of 22 g/10 min, a Shore A (10 s) hardness of 47, a flexural modulus of ~90 MPa, a Tensile strength of 23 MPa and an elongation at break of 750%. | Dark color |

Extrusion Procedure: The process was initiated by feeding polypropylene (PP) via Feeder 1 at 5 kg $h^{-1}$. After steady operation was achieved, the PP feed was then stopped, followed by a brief delay of approximately 10 seconds, after which the HSBC was introduced through Feeder 2 at 500 rpm. Under these conditions, the extrudate gradually transitioned in color from light color (PP-rich) to dark color (HSBC-rich), producing a continuous gradient along the extrusion direction.

The lighter-colored region of the extrudate corresponds to a composition containing predominantly PP (e.g., 70-100 wt.% PP, 0-30 wt.% HSBC). The darker-colored region corresponds to a composition containing a higher proportion of HSBC compared to the lighter-colored region (e.g., 50-100 wt.% HSBC and 0-50 wt.% PP). Intermediate areas between these two regions represent a continuous compositional transition between these limits. A representative image of the resulting gradient sample is shown in the Figure 1 (in grayscale), illustrating the continuous transition from the light polymer-rich zone to the dark elastomer-rich zone along the extruded tape.

Hardness evaluation: Disks were cut from the extruded tape at discrete positions along the color transition region. Shore A hardness was measured according to ASTM D2240 using a Type A durometer with a 30-second dwell time at each position.

Table 2 - Shore A Hardness (30 s) of Tube at Different Positions Along the Gradient Region

| Position (cm) | Shore A Hardness (30 s) |
|---|---|
| 0 | 88.4 |
| 30 | 93.7 |
| 60 | 84.7 |
| 90 | 77.5 |
| 120 | 62.2 |
| 150 | 46.8 |

The data demonstrates a gradual hardness transition from the high-hardness PP region to the lower-hardness HSBC region. This confirms that controlled variation of feed composition during extrusion can yield a continuous gradient in physical properties (e.g., hardness and color) along the length of an extruded tubular article.

Example 2: Extrusion of a Compositionally Graded Tube

Example 2 is conducted using the same extrusion configuration, temperature profile, and operating conditions described in Example 1, except that a tubular die having an outside diameter of 10 mm is employed instead of a slit die. The process demonstrates that equivalent gradient formation can be achieved using pre-blended feed mixtures in place of pure component feeds.

Feeder 1 contains a pre-blended mixture of PP and HSBC at a ratio of 85/15 (w/w).

Feeder 2 contains a corresponding pre-blended mixture at a ratio of 45/55 (w/w) (PP/HSBC).

At start-up, Feeder 1 operates at 5.0 kg h$^{-1}$ (Feeder 2 = 0), providing an initial melt composition of approximately 85 wt.% polymer resin and 15 wt.% elastomer. Over a 2-minute interval, the relative feed rates are ramped linearly so that Feeder 1 decreases from 5.0 kg h$^{-1}$ to 0, while Feeder 2 increases from 0 to 5.0 kg h$^{-1}$. The instantaneous melt composition thus varies continuously from 85/15 to 45/55 (PP/HSBC) along the extrudate length.

The resulting tube exhibits a smooth color transition from the lighter resin-rich region to the darker elastomer-rich region along its wall, corresponding to the progressive composition change. The Shore A hardness decreases from ~84 at 85/15 (PP/HSBC) to ~66 at 45/55 (a ~20.6 % reduction). The flexural modulus decreases from ~1714 MPa to ~950 MPa (a ~44.6 % reduction). Consistent with increasing elastomer content, tensile strength decreases and elongation at break increases.

Example 3: Extrusion of a Compositionally Graded Tube (80/20 → 20/80 PP/HSBC)

Example 3 uses the same extrusion setup, temperature profile, and operating conditions as Example 1, except that a tubular die (OD = 10 mm) is employed instead of a slit die. Pre-blended feeds are used to span a wider composition range.

Feeder 1 (Mix A): PP/HSBC = 80/20 (w/w).

Feeder 2 (Mix B): PP/HSBC = 20/80 (w/w).

At start-up, Feeder 1 operates at 5.0 kg·h$^{-1}$ (Feeder 2 = 0). Over a programmed 2-minute interval, Feeder 1 is ramped linearly to 0 while Feeder 2 is ramped linearly to 5.0 kg·h$^{-1}$, producing a continuous composition transition from 80/20 to 20/80 (PP/HSBC) along the extrudate.

The resulting tube exhibits a smooth color transition from the lighter resin-rich region to the darker elastomer-rich region. The Shore A hardness decreases from approximately 81 at 80/20 (PP/HSBC) to approximately 56 at 20/80. The flexural modulus decreases from approximately 1618 MPa to approximately 472 MPa. Consistent with increasing elastomer content, the tube shows lower tensile strength and higher elongation at break, confirming a continuous gradient in hardness, stiffness, and elasticity along its length.

Example 4: Gradient Tube prepared from Masterbatch

Example 4 is carried out using the same extrusion configuration and parameters described in Example 1, except employing a tubular die (OD = 10 mm) and two different PP/HSBC masterbatches to simplify material handling.

Feeder 1 (Mix A) contains a pre-blended PP/HSBC = 80/20 (w/w) masterbatch (light colored).

Feeder 2 (Mix B) contains a pre-blended PP/HSBC = 40/60 (w/w) masterbatch (dark colored).

At start-up, the melt is 80/20 (PP/HSBC); over a 2-minute programmed ramp, the feed rates are adjusted linearly to produce a continuous transition to 40/60 (PP/HSBC).

The tube i exhibits a continuous hardness gradient consistent with the increasing elastomer fraction. The Shore A hardness decreases from approximately 81 at 80/20 (PP/HSBC) to ~64 at 40/60. The flexural modulus decreases from approximately 1618 MPa to approximately 854 MPa.

Example 5: Gradient Tube prepared from PA6/HSBC

Example 5 follows the same extrusion setup and procedure as Example 1, except that polyamide 6 (PA6) is used in place of polypropylene. PA6 is a polyamide resin having a Shore D of ~75 and a flexural modulus of approximately ~2,000 MPa when tested in accordance with ASTM D2240 and ASTM D790.

Feeder 1 charges a pre-blend PA6/HSBC = 80/20 (w/w) at 5.0→0.0 kg h$^{-1}$ over 2 minutes.

Feeder 2 charges a pre-blend PA6/HSBC = 40/60 (w/w) at 0.0→5.0 kg h$^{-1}$ over the same interval (linear ramps).

The melt composition varies continuously from 80/20 to 40/60 (PA6/HSBC) along the extrudate length. The Shore A hardness decreases from approximately 85 at 80/20 to approximately 66 at 40/60. The flexural modulus decreases from approximately 1.6 GPa to approximately 0.8 GPa.

**Claims**

1. A tube having an outside diameter (OD), the tube comprising along its length:

   a first region comprising a first composition having defined concentrations of components comprising:

a) 70-100 wt.% of a first polymer resin;
b) 0-30 wt.% of a first elastomer; and
c) 0-10 wt.% optional components;

a second region comprising a second composition having defined concentrations of components comprising:

a) 0-50 wt.% of a second polymer resin, same or different from the first polymer resin;
b) 50-100 wt.% of a second elastomer, same or different from the first elastomer; and
c) 0-10 wt.% optional components, same or different from the optional components in the first composition;

wherein the concentrations of the polymer resin and elastomer components vary longitudinally and continuously along the length of the tube between the first region and the second region to form a compositionally graded structure in which at least one physical property selected from hardness, tensile strength, elongation at break, and flexural modulus differs by at least 10%, 20%, or 30% between the first region and the second region, wherein hardness is measured according to ASTM D2240, flexural modulus according to ASTM D790, tensile strength according to ASTM D638, and elongation at break according to ASTM D412;
wherein the tube has a length-to-diameter (L/OD) ratio of from 5 to 1,500;
wherein the polymer resin is selected from fluorine-based polymers, polyolefins, polyurethanes, styrenic polymers, polyesters, polyamides, vinyl polymers, polycarbonates, and mixtures thereof; and
wherein the elastomer is selected from styrenic thermoplastic elastomers, styrenic thermoplastic olefins, polyolefin elastomers, ethylene-propylene rubber, thermoplastic polyurethanes, and mixtures thereof; and
wherein the polymer resin and the elastomer differ in at least one of Shore A hardness, Shore D hardness, and flexural modulus by at least 20%, 25%, or 30 %.

2. The tube of claim 1, wherein the tube is obtained by continuous extrusion, optionally using at least two feeders positioned along an extruder barrel to vary the relative proportions of the polymer resin and elastomer along the length of the tube.

3. The tube of any of claims 1-2, wherein the elastomer is a styrenic-based thermoplastic elastomer selected from unhydrogenated styrenic block copolymers and hydrogenated styrenic block copolymers.

4. The tube of any of claims 1-3, wherein the styrenic-based thermoplastic elastomer is a hydrogenated styrenic block copolymer having a general configuration selected from S-E/B-S, $(S-E/B)_nX$, $(S-E/B-S)_nX$, S-EP-S, (S-EP)nX, (S-EP-S)nX, S-E/B/S-S, $(S-E/B/S-S)_nX$, $(S-E/B/S)_nX$, S-EP/S-S, $(S-EP/S-S)_nX$, $(S-EP/S)_nX$, and mixtures thereof; wherein

each block S is a polymer block composed of vinyl aromatic units;
each block E/B is a polymer block composed of ethylene ("E") units and butylene ("B") units;
each block EP is a polymer block composed of ethylene-propylene ("EP") units;
each block E/B/S is a polymer block composed of ethylene ("E") units / butylene ("B") units / and vinyl aromatic ("S") units;
each block EP/S is a polymer block composed of ethylene-propylene ("EP") units and vinyl aromatic ("S") units;
n is an integer from 2 to 30; and
X is a residue of a coupling agent.

5. The tube of any of claims 1-4, wherein the polymer resin is a polyolefin.

6. The tube of any of claims 1-5, wherein the tube is obtained by continuous extrusion in an extruder, wherein the polymer resin and elastomer concentrations vary continuously along the extrusion direction to form a longitudinal composition gradient without co-extrusion of separate streams.

7. The tube of any of claims 1-6, wherein the tube exhibits a hardness variation of at least 10 %, 20 %, or 30 % between the first region and the second region, and wherein said hardness varies continuously along the longitudinal direction of the tube corresponding to the extrusion direction over at least 30 %, 40 %, or 50 % of the total tube length.

8. The tube of any of claims 1-7, wherein the tube exhibits a longitudinal hardness gradient ranging from a Shore D hardness of 60-90 at the first region to a Shore A hardness of 15-50 at the second region.

9. The tube of any of claims 1-8, wherein the tube has a total length of 4 inches to 8.2 ft (0.1 m to 2.5 m), corresponding to a length-to-diameter (L/OD) ratio of 5-700.

10. The tube of any of claims 1-9, wherein the tube is obtained by progressively varying the feed rate of the elastomer relative to the polymer resin over time during continuous extrusion through separate primary and secondary feeders positioned at different barrel sections of an extruder, thereby forming a longitudinal property gradient along the extrusion direction without joining separate tube sections.

11. The tube of any of claims 1-10, wherein the tube length from the first region to the second region exhibits at least one of the following longitudinal property gradients:

    (a) hardness decreasing from 60-90 of Shore D at the first region to 15-50 of Shore A at the second region;
    (b) tensile strength decreasing from 25-120 MPa at the first region to 2-30 MPa at the second region;
    (c) flexural modulus decreasing from 1,000-5,000 MPa at the first region to 1-100 MPa at the second region; and
    (d) elongation at break increasing from 50-200 % at the first region to 150-1,000 % at the second region.

12. A method of making a tube having an outside diameter (OD), the method comprising:

    feeding a first composition having defined concentrations of components comprising a polymer resin, an elastomer, and optional components to a first feeder of an extruder;
    feeding a second composition having defined concentrations of components comprising a polymer resin, an elastomer, and optional components to a second feeder located downstream along a barrel of the extruder;
    optionally feeding one or more optional components to the first feeder, second feeder, or both;
    controlling the relative feed rates of the first composition and the second composition during continuous extrusion to vary the concentrations of the polymer resin and elastomer components longitudinally and continuously along the extrusion direction, thereby forming a compositionally graded melt; and
    extruding the compositionally graded melt through a die to produce a tube in which at least one physical property selected from hardness, tensile strength, elongation at break, or flexural modulus differs by at least 10%, 20%, or 30% between the first region and the second region, wherein hardness is measured according to ASTM D2240, flexural modulus according to ASTM D790, tensile strength according to ASTM D638, and elongation at break according to ASTM D412; and
    wherein the first composition comprises 70-100 wt.% of a first polymer resin, 0-30 wt.% of a first elastomer, and 0-10 wt.% optional components;
    wherein the second composition comprises 0-50 wt.% of a second polymer resin, same or different from the first polymer resin, 50-100 wt.% of a second elastomer, same or different from the first elastomer, and 0-10 wt.% optional components, same or different from the optional components in the first composition, each based on the total weight of the respective composition;
    wherein the polymer resin is selected from the group of fluorine-based polymers, polyolefins, polyurethanes, styrenic polymers, polyesters, polyamides, vinyl polymers, polycarbonates and mixtures thereof;
    wherein the elastomer is selected from the group of styrenic-based thermoplastic elastomers, styrenic-based thermoplastic olefins, polyolefin elastomers, ethylene propylene rubber, thermoplastic polyurethanes, and mixtures thereof; and
    wherein the polymer resin and the elastomer differ in at least one of Shore A hardness, Shore D hardness, and flexural modulus by at least 20 %, 25 %, or 30 %.

13. The method of claim 12, wherein the polymer resin is a polyolefin and the elastomer is a styrenic-based thermoplastic elastomer selected from unhydrogenated or hydrogenated styrenic block copolymers.

14. The method of any of claims 12-13, wherein the compositional gradient is established by progressively varying the feed rate of the elastomer relative to the polymer resin over time in a single extruder, thereby forming a longitudinal and continuous composition gradient along the extrusion direction without co-extrusion of separate material streams into the die.

15. The method of any of claims 12-14, wherein the tube obtained exhibits a hardness variation of at least 10 %, 20 %, or 30 % between the first region and the second region, and wherein said hardness varies continuously along the longitudinal extrusion direction.

SEBS

PP

Fig 1

| | Europäisches Patentamt European Patent Office Office européen des brevets | **EUROPEAN SEARCH REPORT** | **Application Number** EP 25 21 4765 |
|---|---|---|---|

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | WO 2021/158826 A1 (CAREFUSION 303 INC [US]) 12 August 2021 (2021-08-12) * paragraph [0027] * * the claims * * figures 1, 2 * ----- | 1-15 | INV. B29C48/00 B29C48/16 B32B1/08 C08L23/12 |
| A | KRIHA OLAF ET AL: "Polymer Tubes with Longitudinal Composition Gradient by Face-to-Face Wetting", CHEMISTRY OF MATERIALS, vol. 20, no. 3, 22 December 2007 (2007-12-22), pages 1076-1081, XP093377922, US ISSN: 0897-4756, DOI: 10.1021/cm702088v Retrieved from the Internet: URL:https://www-old.mpi-halle.mpg.de/mpi/p ubli/pdf/7795_08.pdf> * the whole document * ----- | 1-15 | |

| | TECHNICAL FIELDS SEARCHED (IPC) |
|---|---|
| | B32B B29C C08L |

The present search report has been drawn up for all claims

| Place of search | Date of completion of the search | Examiner |
|---|---|---|
| Munich | 19 March 2026 | Nikolai, Joachim |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 25 21 4765

This annex lists the patent family members relating to the patent documents cited in  the above-mentioned European search report.
The members are as contained in the European Patent Office EDP file on
The European Patent Office is in no way liable for these particulars which are merely given for the purpose of information.

19-03-2026

| Patent document cited in search report | Publication date | Patent family member(s) | | Publication date |
|---|---|---|---|---|
| WO 2021158826 A1 | 12-08-2021 | AU | 2021217040 A1 | 01-09-2022 |
| | | CA | 3166948 A1 | 12-08-2021 |
| | | CN | 115175725 A | 11-10-2022 |
| | | CN | 121490232 A | 10-02-2026 |
| | | EP | 4100097 A1 | 14-12-2022 |
| | | JP | 2023516899 A | 21-04-2023 |
| | | JP | 2025170169 A | 14-11-2025 |
| | | US | 2021244931 A1 | 12-08-2021 |
| | | US | 2023347127 A1 | 02-11-2023 |
| | | WO | 2021158826 A1 | 12-08-2021 |

For more details about this annex : see Official Journal of the European Patent Office, No. 12/82